# EUROPÄISCHE PATENTANMELDUNG

(11) **EP 1 952 958 A1**
(43) Veröffentlichungstag der Anmeldung: **06.08.2008**
(21) Anmeldenummer: 08000897.2
(22) Anmeldetag: 18.01.2008
(51) Int. Cl.: B27B 5/07

(54) **Vertikale Plattensäge**

(30) Priorität: 02.02.2007 DE 202007001835 U
(71) Anmelder: REICH SPEZIALMASCHINEN GmbH, 72622 Nürtingen (DE)
(72) Erfinder: Lorber, Denis, 72663 Großbettlingen (DE); Maiero, Fritz, 72636 Frickenhausen (DE); Tinz, Bernhard, H., 72766 Reutlingen (DE)
(74) Vertreter: Hoeger, Stellrecht & Partner Patentanwälte

(57) **Zusammenfassung**

Die Erfindung betrifft eine vertikale Plattensäge (10) mit einer Stützwand (15) zur Lagerung eines Werkstückes und mit einem längs der Stützwand (15) verfahrbaren Sägebalken (23), an dem ein Sägeaggregat (25) mit einem drehend antreibbaren Sägeblatt längs des Sägebalkens (23) verfahrbar gelagert ist, wobei das Sägeaggregat (25) eine vom Benutzer ergreifbare Handhabe (30) aufweist und das Sägeaggregat (25) mittels der Handhabe (30) vom Benutzer manuell verschwenkbar ist zwischen einer Vertikalschnittposition, in der das Sägeblatt vertikal ausgerichtet ist, und einer Horizontalschnittposition, in der das Sägeblatt horizontal ausgerichtet ist. Um die vertikale Plattensäge (10) derart weiterzubilden, dass sie eine einfachere Handhabung beim Verschwenken des Sägeaggregates (25) aufweist, wird vorgeschlagen, dass die Handhabe (30) einen sich in Umfangsrichtung über einen Winkelbereich von mindestens 200° erstreckenden Handhabungsring (31) aufweist

## Beschreibung

Die Erfindung betrifft eine vertikale Plattensäge mit einer Stützwand zur Lagerung eines Werkstückes und mit einem längs der Stützwand verfahrbaren Sägebalken, an dem ein Sägeaggregat mit einem drehend antreibbaren Sägeblatt längs des Sägebalkens verfahrbar gelagert ist, wobei das Sägeaggregat eine vom Benutzer ergreifbare Handhabe aufweist und das Sägeaggregat mittels der Handhabe vom Benutzer manuell verschwenkbar ist zwischen einer Vertikalschnittposition, in der das Sägeblatt vertikal ausgerichtet ist, und einer Horizontalschnittposition, in der das Sägeblatt horizontal ausgerichtet ist.

Mittels derartiger Plattensägen können plattenförmige Werkstücke auf vorgegebene Maße zugesägt werden. Hierbei können Sägeschnitte in vertikaler Richtung und in horizontaler Richtung durchgeführt werden. Hierzu kann das Sägeaggregat wahlweise eine Vertikalschnittposition oder eine Horizontalschnittposition einnehmen. In der Vertikalschnittposition ist das Sägeblatt des Sägeaggregates vertikal ausgerichtet und durch Verfahren des Sägeaggregates längs des Sägebalkens kann das Werkstück in horizontaler Richtung gesägt werden. In der Horizontalschnittposition ist das Sägeblatt horizontal ausgerichtet und durch Verfahren des Sägeaggregates zusammen mit dem Sägebalken längs der Stützwand kann das Werkstück in horizontaler Richtung gesägt werden.

Zum Verschwenken des Sägeaggregates zwischen der Vertikalschnittposition und der Horizontalschnittposition weist das Sägeaggregat eine vom Benutzer ergreifbare Handhabe auf. Diese ist üblicherweise in Form eines Schwenkhebels ausgebildet. Vom Benutzer kann das Sägeaggregat am Schwenkhebel ergriffen werden, um es in die gewünschte Position zu verschwenken. Dies ist für den Benutzer mit einem nicht unerheblichen Kraftaufwand verbunden.

Aufgabe der vorliegenden Erfindung ist es, eine vertikale Plattensäge der eingangs genannten Art derart weiterzubilden, dass sie eine einfachere Handhabung beim Verschwenken des Sägeaggregates aufweist.

Diese Aufgabe wird bei einer vertikalen Plattensäge der gattungsgemäßen Art erfindungsgemäß dadurch gelöst, dass die Handhabe einen sich in Umfangsrichtung über einen Winkelbereich von mindestens 200° erstreckenden Handhabungsring aufweist.

Die erfindungsgemäße Plattensäge weist eine Handhabe auf, die vom Benutzer sowohl in der Vertikalschnittposition als auch in der Horizontalschnittposition ergonomisch günstig ergriffen werden kann. Hierzu umfasst die Handhabe einen Handhabungsring, der sich in Umfangsrichtung über einen Winkelbereich von mindestens 200° erstreckt. Der Handhabungsring bildet Griffbereiche aus, die vom Benutzer ergriffen werden können. Da sich der Handhabungsbereich über einen Winkelbereich von mindestens 200° erstreckt, kann er in beiden Endpositionen des Sägeaggregates auf einfache Weise vom Benutzer ergriffen werden, so dass dieser mit verhältnismäßig geringem Kraftaufwand das Sägeaggregat verschwenken kann, indem er auf das Sägeaggregat das für die Schwenkbewegung erforderliche Drehmoment ausübt.

Vorzugsweise erstreckt sich der Handhabungsring in Umfangsrichtung über einen Winkelbereich von mindestens 270°, insbesondere kann vorgesehen sein, dass sich der Handhabungsring in Umfangsrichtung über einen Winkelbereich von mehr als 330° erstreckt. Dies ermöglicht eine ergonomisch besonders günstige Ausgestaltung der Handhabe. Insbesondere gibt eine derartige Ausgestaltung dem Benutzer die Möglichkeit, die Handhabe mit beiden Händen zu ergreifen, wobei es ihm sowohl in der Horizontalschnittposition als auch in der Vertikalschnittposition des Sägeaggregates ermöglicht wird, die Handhabe mit beiden Händen derart zu ergreifen, dass er das Sägeaggregat mit verhältnismäßig geringen Kräften verschwenken kann.

Bei einer mechanisch besonders belastbaren Ausgestaltung der Handhabe ist der Handhabungsring in sich geschlossen. Der in sich geschlossene Handhabungsring kann nach Art eines Stellrades ausgestaltet sein. Er weist eine hohe mechanische Stabilität auf, so dass die Gefahr einer Beschädigung der Handhabe während des Gebrauchs der Plattensäge sehr gering gehalten werden kann.

Der Handhabungsring kann beispielsweise kreisförmig oder ovalförmig ausgestaltet sein. Dies ermöglicht eine besonders einfache Handhabung der Plattensäge beim Verschwenken des Sägeaggregates, denn unabhängig von der jeweils eingenommenen Schnittposition kann der Handhabungsring vom Benutzer in der für ihn ergonomisch günstigsten Art und Weise ergriffen werden.

Es kann vorgesehen sein, dass die Handhabe scheibenförmig ausgebildet ist, wobei sie eine kreis- oder ovalförmige Ausgestaltung aufweisen kann. Die Griffbereiche werden bei einer derartigen Ausgestaltung vom Außenrand der scheibenförmigen Handhabe gebildet. Der Außenrand kann hierbei nach Art eines Wulstes ausgebildet sein, der einen eher flach gehaltenen Mittelabschnitt in Umfangsrichtung umgibt.

Von Vorteil ist es, wenn der Handhabungsring über mindestens eine Haltestrebe mit einem Zentralteil der Handhabe verbunden ist. Die Haltestrebe bietet eine weitere Möglichkeit für den Benutzer, die Handhabe beim Verschwenken des Sägeaggregates in einer ergonomisch möglichst günstigen Art und Weise zu ergreifen.

Von besonderem Vorteil ist es, wenn die mindestens eine Haltestrebe in der Vertikalschnittposition und in der Horizontalschnittposition schräg zur Vertikalen ausgerichtet ist. Dies gibt dem Benutzer die Möglichkeit, mit verhältnismäßig geringem Kraftaufwand ein beträchtliches Drehmoment auf das Sägeaggregat auszuüben, indem er die Handhabe an der Haltestrebe ergreift.

Vorzugsweise ist die mindestens eine Haltestrebe in der Vertikalschnittposition und in der Horizontalschnittposition des Sägeaggregates im Winkel von etwa 45° zur Vertikalen ausgerichtet.

Bevorzugt weist die Handhabe zwei fluchtend zueinander ausgerichtete Haltestreben auf, die vorzugsweise in einer Symmetrieebene der Handhabe angeordnet sind.

Die Handhabe ist bei einer besonders bevorzugten Ausgestaltung der erfindungsgemäßen Plattensäge von einem das Sägeaggregat umgebenden Gehäuse farblich abgesetzt. Dadurch kann sie vom Benutzer deutlich erkannt werden. Dies verringert die Gefahr einer Verletzung des Benutzers durch die Handhabe.

Günstig ist es, wenn die Handhabe in die der Stützwand abgewandte Richtung nach vorne vom Sägeaggregat absteht. Die Handhabe bildet bei einer derartigen Ausgestaltung den vordersten Bereich der Plattensäge aus. Es hat sich gezeigt, dass dadurch die Handhabung der Plattensäge weiter vereinfacht werden kann.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer erfindungsgemäßen vertikalen Plattensäge mit einem Sägeaggregat;
- Figur 2:: eine perspektivische Darstellung des Sägeaggregates bei abgenommenem Gehäuse, wobei das Sägeaggregat eine Vertikalschnittposition einnimmt und
- Figur 3:: eine perspektivische Darstellung des Sägeaggregates mit abgenommenem Gehäuse, wobei das Sägeaggregat eine Horizontalschnittposition einnimmt.

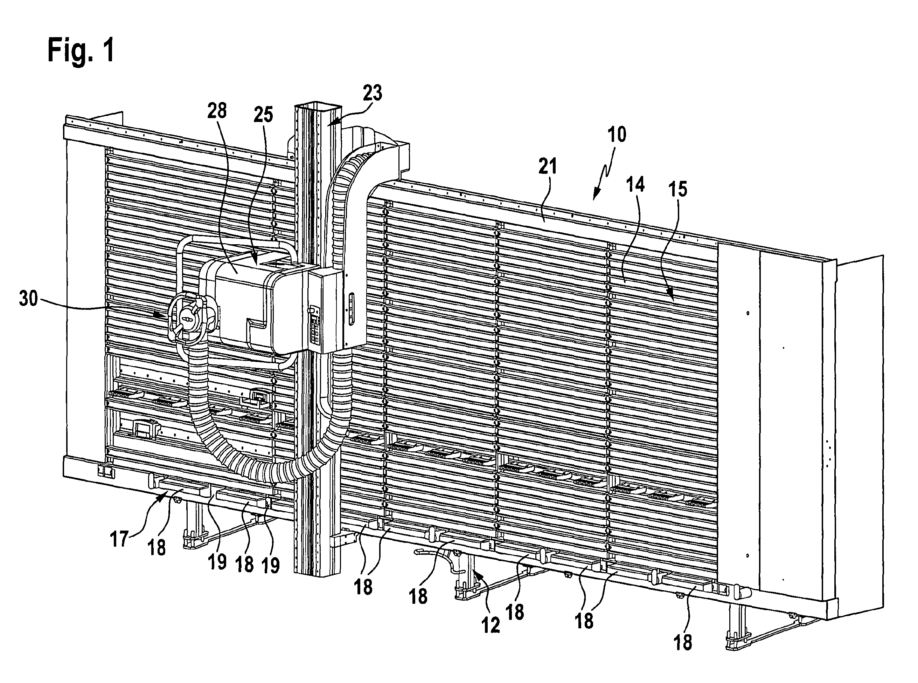

In Figur 1 ist schematisch eine erfindungsgemäße vertikale Plattensäge 10 dargestellt mit einem Maschinengestell 12, das eine nach Art eines Stützrostes 14 ausgebildete Stützwand 15 trägt. Die Stützwand 15 ist nicht vertikal ausgerichtet sondern etwas zur Vertikalen geneigt, so dass plattenförmige Werkstücke, die mittels der Plattensäge 10 zugesägt werden sollen, an der Vorderseite der Stützwand 15 einen sicheren Halt finden. Um die Werkstücke unterseitig abstützen zu können, ist am unteren Ende der Stützwand 15 ein Werkstückträger 17 angeordnet mit einer Vielzahl von Tragsegmenten 18, die in Längsrichtung der Stützwand 15 im Abstand zueinander angeordnet sind. Benachbarte Tragsegmente 18 bilden zwischen sich eine Unterbrechung 19 aus.

Am oberen Ende der Stützwand 15 ist eine Führungsschiene 21 angeordnet. Diese dient der Führung eines Sägebalkens 23, der die Stützwand 15 in vertikaler Richtung überdeckt und sowohl über das untere Ende als auch über das obere Ende der Stützwand 15 herausragt. Der Sägebalken 23 ist an der Führungsschiene 21 verfahrbar gelagert und kann vom Benutzer manuell längs der Stützwand 15 verschoben werden.

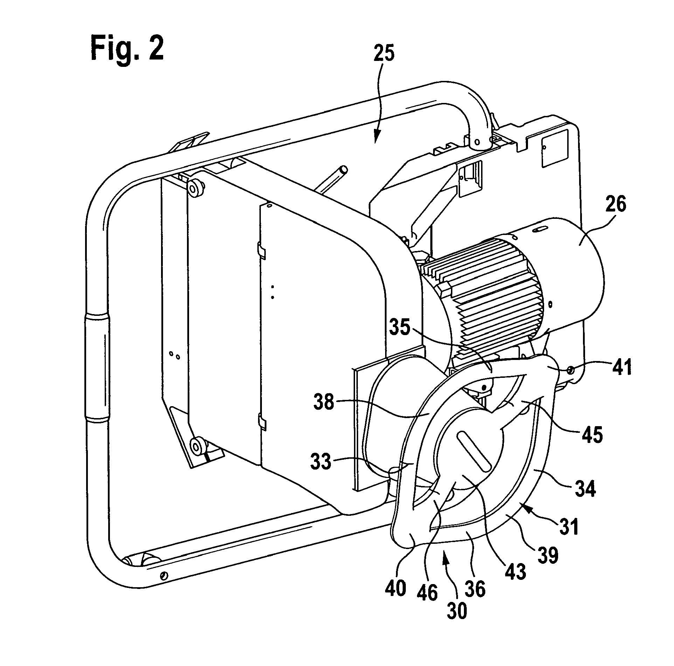

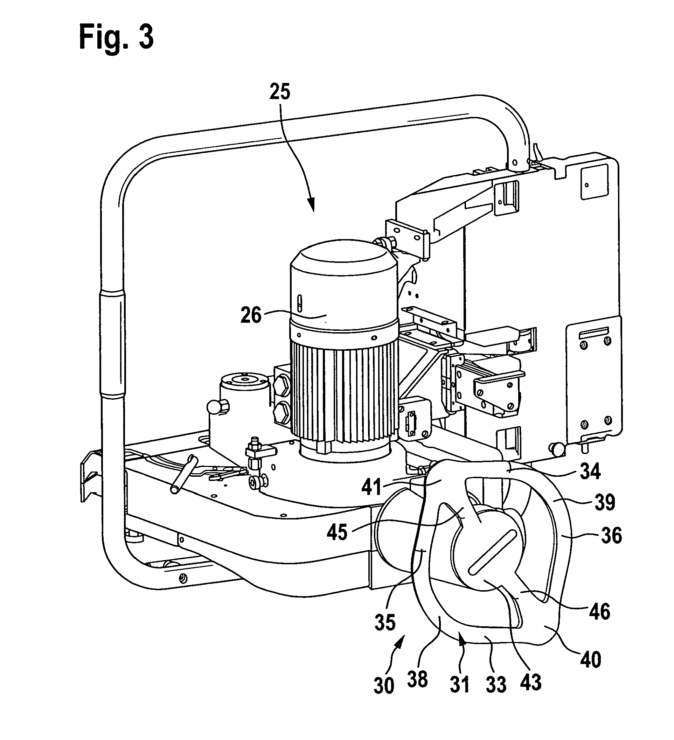

Am Sägebalken 23 ist ein Sägeaggregat 25 in Längsrichtung des Sägebalkens 23 verfahrbar gelagert. Das Sägeaggregat 25 weist einen Antriebsmotor 26 auf, der in üblicher Weise ein in der Zeichnung nicht dargestelltes Sägeblatt drehend antreibt zur Vornahme eines Sägeschnittes. Das Sägeaggregat 25 ist von einem Gehäuse 28 umgeben, das zur besseren Verdeutlichung des Sägeaggregates 25 in der Figuren 2 und 3 nicht dargestellt ist.

Das Sägeaggregat 25 ist vom Benutzer manuell zwischen der in Figur 2 dargestellten Vertikalschnittposition und der in Figur 3 dargestellten Horizontalschnittposition verschwenkbar. In der Vertikalschnittposition ist das Sägeblatt des Sägeaggregates 25 vertikal und somit parallel zum Sägebalken 23 ausgerichtet, und in der Horizontalschnittposition ist das Sägeblatt des Sägeaggregates 25 horizontal und damit senkrecht zum Sägebalken 23 ausgerichtet. Um ein an der Stützwand 15 angeordnetes Werkstück in vertikaler Richtung aufzutrennen, kann das Sägeaggregat 25 in seine Vertikalschnittposition verschwenkt werden und anschließend kann es längs des Sägebalkens 23 verfahren werden. Soll das Werkstück in horizontaler Richtung aufgetrennt werden, so kann das Sägeaggregat 25 in seine Horizontalschnittposition verschwenkt und anschließend zusammen mit dem Sägebalken 25 längs der Stützwand 15 parallel zur Führungsschiene 21 verfahren werden.

Zum manuellen Verschwenken des Sägeaggregates 25 weist dieses eine Handhabe 30 auf, die mit einem Handhabungsring nach Art eines Stellrades 31 ausgestaltet ist und nach vorne, das heißt in die der Stützwand 15 abgewandte Richtung vom Gehäuse 28 vorsteht. Damit das Stellrad 31 vom Benutzer deutlich erkannt wird, ist es farblich vom Gehäuse 28 abgesetzt.

Das Stellrad erstreckt sich in Umfangsrichtung über 360°, das heißt es ist in sich geschlossen. Dies verleiht dem Stellrad 31 eine hohe mechanische Stabilität. Statt einer derartigen Ausgestaltung könnte aber auch vorgesehen sein, dass sich das Stellrad in Umfangsrichtung über einen kleineren Winkelbereich erstreckt. Der Winkelbereich sollte allerdings mindestens 200° betragen, vorzugsweise mindestens 270°, beispielsweise mehr als 330°. Dies hat nämlich den Vorteil, dass das Stellrad 31 vom Benutzer sowohl in der Horizontalschnittposition als auch in der Vertikalschnittposition des Sägeaggregats 25 in ergonomisch günstiger Weise ergriffen werden kann, wobei der Benutzer mit verhältnismäßig geringem Kraftaufwand das zum Verschwenken des Sägeaggregats erforderliche Drehmoment ausüben kann. Das Stellrad 31 kann vom Benutzer in mehreren Bereichen ergriffen werden.

Hierzu weist das Stellrad 31 ein erstes Paar von Griffbereichen 33, 34 und ein zweites Paar von Griffbereichen 35, 36 auf. Die beiden ersten Griffbereiche 33, 34 sind ebenso wie die beiden zweiten Griffbereiche 35, 36 im Wesentlichen parallel und im Abstand zueinander angeordnet. In der in Figur 2 dargestellten Vertikalschnittposition des Sägeaggregates 25 sind die beiden ersten Griffbereiche 33, 34 im Wesentlichen vertikal und die beiden zweiten Griffbereiche 35, 36 im Wesentlichen horizontal ausgerichtet. Nimmt das Sägeaggregat 25 seine in Figur 3 dargestellte Horizontalschnittposition ein, so sind die beiden ersten Griffbereiche 33, 34 im Wesentlichen horizontal und die beiden zweiten Griffbereiche 35, 36 im Wesentlichen vertikal ausgerichtet. Somit stehen dem Benutzer in beiden Positionen des Sägeaggregates 25 vertikal und horizontal ausgerichtete Griffbereiche zum Verschwenken des Sägeaggregates 25 zur Verfügung.

Das Stellrad 31 ist in Form eines in sich geschlossenen Ringes ausgebildet, wobei der erste Griffbereich 33 über einen bogenförmigen Verbindungsbereich 38 mit dem zweiten Griffbereich 35 einstückig verbunden ist, und der erste Griffbereich 34 ist über einen bogenförmigen Verbindungsbereich 39 mit dem zweiten Griffbereich 36 einstückig verbunden. Die Handhabe 30 weist außerdem zwei gewinkelte Verbindungsbereiche 40 und 41 auf, wobei der gewinkelte Verbindungsbereich 40 den ersten Griffbereich 33 einstückig mit dem zweiten Griffbereich 36 verbindet, und der gewinkelte Verbindungsbereich 41 verbindet den ersten Griffbereich 34 einstückig mit dem zweiten Griffbereich 35.

Die Handhabe 30 umfasst darüber hinaus ein mit dem Sägeaggregat 25 starr verbundenes Zentralteil 43, an dem das Stellrad 31 über zwei fluchtend zueinander ausgerichtete Haltestreben 45, 46 starr verbunden ist. Ausgehend vom Zentralteil 43 mündet die Haltestrebe 45 mittig in den gewinkelten Verbindungsbereich 40, und die Haltestrebe 46 mündet ausgehend vom Zentralteil 43 mittig in den gewinkelten Verbindungsbereich 41. Sowohl in der Vertikalschnittposition als auch in der Horizontalschnittposition sind die Haltestreben 45, 46 in einem Winkel von ca. 45° zur Vertikalen ausgerichtet. Zum Verschwenken des Sägeaggregates 25 stehen dem Benutzer somit nicht nur die horizontal und vertikal ausgerichteten Griffbereiche 33, 34, 35, 36 zur Verfügung, sondern der Benutzer kann die Handhabe 30 zusätzlich im Bereich der Haltestreben 45, 46 ergreifen, die jeweils schräg zur Vertikalen ausgerichtet sind. Somit kann der Benutzer die Handhabe 30 in jeder Stellung des Sägeaggregates 25 in ergonomisch günstiger Art und Weise ergreifen, um mit einem möglichst geringen Kraftaufwand auf das Sägeaggregat 25 das zum Verschwenken erforderliche Drehmoment auszuüben.

## Patentansprüche

1. Vertikale Plattensäge (10) mit einer Stützwand (15) zur Lagerung eines Werkstückes und mit einem längs der Stützwand (15) verfahrbaren Sägebalken (23), an dem ein Sägeaggregat (25) mit einem drehend antreibbaren Sägeblatt längs des Sägebalkens (23) verfahrbar gelagert ist, wobei das Sägeaggregat (25) eine vom Benutzer ergreifbare Handhabe (30) aufweist und das Sägeaggregat (25) mittels der Handhabe (30) vom Benutzer manuell verschwenkbar ist zwischen einer Vertikalschnittposition, in der das Sägeblatt vertikal ausgerichtet ist, und einer Horizontalschnittposition, in der das Sägeblatt horizontal ausgerichtet ist, **dadurch gekennzeichnet, dass** die Handhabe (30) einen sich in Umfangsrichtung über einen Winkelbereich von mindestens 200° erstreckenden Handhabungsring (31) aufweist.

2. Plattensäge nach Anspruch 1, **dadurch gekennzeichnet, dass** sich der Handhabungsring (31) in Umfangsrichtung über einen Winkelbereich von mindestens 270° erstreckt.

3. Plattensäge nach Anspruch 1 oder 2, **dadurch gekennzeichnet, dass** der Handhabungsring (31) in sich geschlossen ist.

4. Plattensäge nach Anspruch 3, **dadurch gekennzeichnet, dass** der Handhabungsring (31) kreisförmig oder ovalförmig ausgebildet ist.

5. Plattensäge nach einem der voranstehenden Ansprüche, **dadurch gekennzeichnet, dass** der Handhabungsring (31) über mindestens eine Haltestrebe (45, 46) mit einem Zentralteil (43) der Handhabe (30) verbunden ist.

6. Plattensäge nach Anspruch 5, **dadurch gekennzeichnet, dass** die mindestens eine Haltestrebe (45, 46) in der Vertikalschnittposition und in der Horizontalschnittposition des Sägeaggregates (25) schräg zur Vertikalen ausgerichtet ist.

7. Plattensäge nach Anspruch 5 oder 6, **dadurch gekennzeichnet, dass** die mindestens eine Haltestrebe (45, 46) in der Vertikalschnittposition und in der Horizontalschnittposition des Sägeaggregates (25) im Winkel von etwa 45° zur Vertikalen ausgerichtet ist.

8. Plattensäge nach einem der voranstehenden Ansprüche, **dadurch gekennzeichnet, dass** die Handhabe (30) von einem das Sägeaggregat (25) umgebenden Gehäuse (28) farblich abgesetzt ist.

9. Plattensäge nach einem der voranstehenden Ansprüche, **dadurch gekennzeichnet, dass** die Handhabe (30) in die der Stützwand (15) abgewandte Richtung nach vorne vom Sägeaggregat (25) absteht.
